# EUROPÄISCHE PATENTANMELDUNG

(11) **EP 3 300 972 A1**
(43) Veröffentlichungstag der Anmeldung: **04.04.2018**
(21) Anmeldenummer: 17185546.3
(22) Anmeldetag: 09.08.2017
(51) Int. Cl.: B60S 1/52, B60S 1/56, B60S 1/68, B60S 1/66, F28G 1/16, B60S 1/62

(54) **LANDWIRTSCHAFTLICHE ARBEITSMASCHINE**

(30) Priorität: 29.09.2016 DE 102016118405
(71) Anmelder: CLAAS Tractor S.A.S., 78141 Vélizy-Villacoublay Cedex (FR)
(72) Erfinder: Durieux, David, 92500 Rueil Malmaison (FR)
(74) Vertreter: Budach, Steffen

(57) **Zusammenfassung**

Eine landwirtschaftliche Arbeitsmaschine (10) umfasst eine Karosserie (34), eine Fahrerkabine (12) mit Kabinenscheiben (22) und einem Kabinendach (24), Bodeneingriffsmittel (26) zum Abstützen der Arbeitsmaschine (10) gegenüber dem Boden, wobei die Bodeneingriffsmittel (26) durch einen Antriebsmotor (16) antreibbar sind. Gemäß der Erfindung weist die Arbeitsmaschine (10) ein fluidbasiertes Reinigungssystem (36) mit mindestens einer Düse (42) und mindestens einem Fluidspeicher (38) auf, durch welches zumindest ein Teil der Arbeitsmaschine (10) reinigbar ist.

## Beschreibung

Die Erfindung betrifft eine landwirtschaftliche Arbeitsmaschine gemäß dem Oberbegriff des Anspruchs 1.

Landwirtschaftliche Arbeitsmaschinen, beispielsweise Traktoren oder selbstfahrende Erntemaschinen, werden üblicherweise an unterschiedlichen und zum Teil räumlich weit verteilt liegenden Arbeitsorten eingesetzt, wodurch oftmals eine Benutzung öffentlicher Verkehrswege notwendig ist. In dem Arbeitsumfeld, in dem die Arbeitsmaschinen eingesetzt werden, kommt es häufig zu erheblichen Verschmutzungen der Arbeitsmaschine. Für eine anschließende sichere Teilnahme am öffentlichen Straßenverkehr ist daher oftmals eine Reinigung der Arbeitsmaschine erforderlich, wobei neben einer Fahrerkabine und insbesondere deren Scheiben, eine Reinigung von Bodeneingriffsmitteln erforderlich sein kann, um eine übermäßige Verschmutzung einer Straße zu vermeiden. Zudem kann es durch die Verschmutzung auch zu einer Beeinträchtigung der Funktionsfähigkeit der Arbeitsmaschine kommen, wenn Arbeitsaggregate wie Kühler derart verschmutzt sind, dass die Kühlleistung absinkt. Ein Reinigen der Arbeitsmaschine oder einzelner Aggregate der Arbeitsmaschine führt zu einer erhöhten Arbeitsbelastung des Bedieners.

Aus der EP 2 626 227 A1 ist eine Aufbau für ein Kraftfahrzeug bekannt, bei dem spezielle Reinigungsöffnungen, beispielsweise an Kühlern, vorgesehen sind, wodurch der Zeitaufwand für das Reinigen reduziert und der Arbeitsaufwand für den Bediener verringert werden soll. Nach wie vor ist jedoch eine Unterbrechung der eigentlichen Arbeit erforderlich, damit der Bediener die Arbeitsmaschine oder einzelne Aggregate säubern kann, bevor die Arbeit fortgesetzt werden kann. Zudem kann der Bediener nur die an dem Ort der Reinigung, beispielsweise auf einem Feld, verfügbaren Reinigungsmitteln für die Reinigung der Arbeitsmaschine nutzen, wodurch die Arbeitsbelastung für den Bediener erhöht werden kann.

Es ist daher die Aufgabe der vorliegenden Erfindung, eine landwirtschaftliche Arbeitsmaschine bereitzustellen, welche eine Vereinfachung der Reinigung der Arbeitsmaschine und einer Reduzierung der Arbeitsbelastung für einen Bediener ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Eine landwirtschaftliche Arbeitsmaschine umfasst eine Karosserie, eine Fahrerkabine mit Kabinenscheiben und einem Kabinendach, Bodeneingriffsmittel zum Abstützen der Arbeitsmaschine gegenüber dem Boden, wobei die Bodeneingriffsmittel durch einen Antriebsmotor antreibbar sind. Gemäß der Erfindung weist die Arbeitsmaschine ein fluidbasiertes Reinigungssystem mit mindestens einer Düse und mindestens einem Fluidspeicher auf, durch welches zumindest ein Teil der Arbeitsmaschine reinigbar ist. Durch die mindestens eine Düse, welche an der Arbeitsmaschine angeordnet ist, kann zumindest ein Teil der Arbeitsmaschine im Wirkbereich der Düse gereinigt werden. Durch das fluidbasierte Reinigungssystem wird dabei der Düse ein mit einem Druck beaufschlagtes Fluid zugeführt. Hierdurch können durch den Bediener Verschmutzungen einfacher und schneller von der Arbeitsmaschine entfernen. Dies hat den Vorteil, dass die Reinigung der Arbeitsmaschine vereinfacht und die Arbeitsbelastung des Bedieners reduziert werden kann.

In einer bevorzugten Ausgestaltung der Erfindung umfasst das Reinigungssystem eine Druckluftanlage und/oder eine Hochdruckanlage für Wasser. Bei einer Druckluftanlage ist das Fluid, welches der mindestens einen Düse zugeführt wird, Druckluft. Bei der Hochdruckanlage ist das Fluid zur Reinigung Wasser. Eine Druckluftanlage oder Hochdruckanlage kann mit geringem technischen Aufwand in die Arbeitsmaschine integriert werden und ermöglicht eine vereinfachte, wirksame Reinigung der Arbeitsmaschine. Zudem können mit Druckluft und Wasser unterschiedliche Verschmutzungen, beispielsweise Staub oder Erde, zuverlässig entfernt werden.

Besonders bevorzugt sind Düsen des Reinigungssystems innerhalb und/oder außerhalb der Arbeitsmaschine angeordnet. Durch die Anordnung innerhalb und/oder außerhalb der Arbeitsmaschine können diese an jeder für eine Reinigung relevanten Position an oder in der Arbeitsmaschine angeordnet werden.

In einer bevorzugten Ausgestaltung der Erfindung ist eine Düse, insbesondere durch Druckbeaufschlagung, schwenkbar ausgebildet. Hierbei kann eine Düse, insbesondere bei Beaufschlagung mit dem Fluid, aus einer ersten Position in eine zweite Position verschwenkt werden, beispielsweise gegen eine Rückstellfeder. Dies hat den Vorteil, dass mit einfachen Mitteln der Reinigungsbereich, welcher durch die Düse bestrichen wird, vergrößert werden kann.

Ferner ist bevorzugt vorgesehen, dass die Arbeitsmaschine einen Kühler und/oder eine Motorraumabdeckung mit mindestens einem Lüftungsgitter aufweist, wobei mindestens eine intern angeordnete Düse dem Kühler und/oder einem Lüftungsgitter zugeordnet ist. Die intern angeordnete Düse kann dabei unterhalb einer geschlossenen Motorraumabdeckung oder der geschlossenen Karosserie angeordnet sein. Durch diese interne Anordnung kann eine zügige Reinigung beispielsweise eines Kühlers ermöglicht werden, ohne dass die Karosserie oder die Motorraumabdeckung geöffnet werden muss. Zudem kann eine Verschmutzung der Lüftungsgitter, welche üblicherweise außenseitig angeordnet ist, von innen durch die mindestens eine Düse zügig entfernt werden, ohne dass ein Öffnen der Motohaube erforderlich ist.

Vorteilhafterweise ist mindestens eine externe Düse einem Bodeneingriffsmittel und/oder einer Kabinenscheibe zugeordnet. Durch die externe Anordnung der Düsen können die zugeordneten Bereiche, beispielsweise eine Kabinenscheibe und/oder ein Bodeneingriffsmittel, effizient von dem dort anhaftenden Schmutz gereinigt werden. Eine Kabinenscheibe kann dabei auch eine in einem Kabinendach angeordnete, insbesondere bündig mit einer frontseitigen Kabinenscheibe abschließende, Scheibe sein. Durch die externe Anordnung können beispielsweise auch eine Aufstiegsleiter oder Handgriffe der Arbeitsmaschine gereinigt werden.

In einer bevorzugten Ausgestaltung der Erfindung weist das Reinigungssystem mindestens einen ersten Anschluss zur Verbindung mit einer mobilen, insbesondere handgeführten, Düse auf, wobei der erste Anschluss mit Druck beaufschlagbar ist. Der erste Anschluss, welcher mit Druck beaufschlagbar ist, ermöglicht es dem Bediener eine mobile, insbesondere handgeführte, Düse, insbesondere mittels eines Schlauches, anzuschließen, mit der weitere Bereiche der Arbeitsmaschine gereinigt werden können.
In einer besonders bevorzugten Ausgestaltung der Erfindung ist eine Steuereinheit für das Reinigungssystem vorgesehen, wobei eine Betätigung des Reinigungssystems automatisch, und insbesondere sensorbasiert, und/oder manuell erfolgen kann. Die Steuereinheit ermöglicht eine selektive Ansteuerung einzelner Düsen, wodurch jeweils eine gewünschte Reinigung bestimmter Bereiche der Arbeitsmaschine durchführbar ist. Zudem ist es möglich, je nach Anordnung der Düsen und Ausgestaltung des Reinigungssystems, beispielsweise zunächst mit Wasser und anschließend Druckluft eine Reinigung durchzuführen. Dies kann beispielsweise bei einer Kabinenscheibe in dem Kabinendach erfolgen, wobei durch die Druckluft ein längeres Nachlaufen des Wassers vermieden werden kann. Eine sensorbasierte Betätigung des Reinigungssystems kann beispielsweise positionsbezogen mittels eines Positionssensors erfolgen. Die hat den Vorteil, dass die Arbeitsmaschine, sobald diese einen definierbaren Reinigungsbereich z.B. am Feldrand erreicht, automatisch gereinigt wird.

Weiterhin weist das Reinigungssystem vorzugsweise eine Pumpe zur Druckbeaufschlagung des Fluides auf, wobei die Pumpe durch den Antriebsmotor und/oder einen eigenen, insbesondere elektrischen, Antrieb betreibbar ist. Während des Betriebs der Arbeitsmaschine kann die Pumpe durch den Antriebsmotor betrieben werden, wodurch ein leistungsfähiger Antrieb bereitgestellt werden kann. Der Betrieb mit einem eigenen Antrieb hat den Vorteil, dass das Reinigungssystem auch bei abgeschaltetem Antriebsmotor betrieben werden kann. Der Antrieb der Pumpe kann auch alternativ gewählt werden, beispielsweise in Abhängigkeit einer Belastung des Antriebsmotors, um dessen Belastung zu verringern.

Nachfolgend wird die Erfindung unter Bezugnahme auf die anliegende Zeichnung näher erläutert.

Es zeigt:

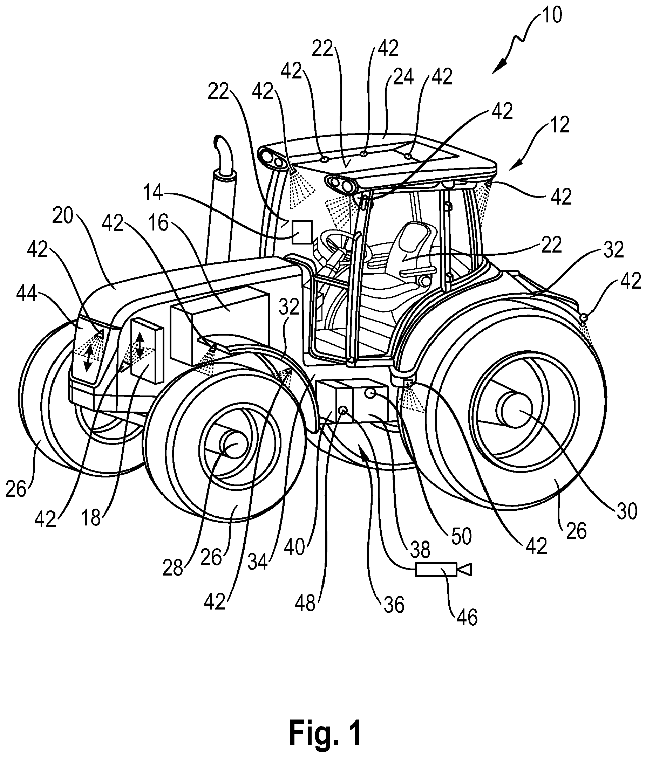

- Fig. 1:: eine schematische perspektivische Ansicht einer landwirtschaftlichen Arbeitsmaschine mit einem Reinigungssystem.

In Figur 1 ist eine landwirtschaftliche Arbeitsmaschine 10 in Form eines Traktors in einer schematischen perspektivischen Ansicht dargestellt, wobei der grundsätzliche Aufbau eines Traktors als dem Fachmann bekannt angesehen wird. Eine landwirtschaftliche Arbeitsmaschine 10 im Sinne der Erfindung kann jedes zur landwirtschaftlichen Arbeit einsetzbares Fahrzeug sein, beispielsweise ein Traktor, ein Frontlader, eine Baumaschine, oder eine selbstfahrende Erntemaschine, wie ein Mähdrescher oder Feldhäcksler. Der Traktor weist zur Aufnahme eines Bedieners eine geschlossene Fahrerkabine 12 auf, wobei innerhalb der Fahrerkabine 12 üblicherweise eine Steuereinheit 14 zur Bedienung und Steuerung der landwirtschaftlichen Arbeitsmaschine 10 sowie deren Komponenten angeordnet ist. Zum Antrieb und zur Bereitstellung der zum Betrieb der Arbeitsmaschine 10 benötigten Energie weist die landwirtschaftliche Arbeitsmaschine 10 einen Antriebsmotor 16 in Form eines Verbrennungsmotors auf. Zur Kühlung des Antriebsmotors 16 ist ein Kühlsystem vorgesehen, welches zumindest einen Lüfter und einen Kühler 18 zur Kühlung des Kühlwassers des Antriebsmotors 16 durch den von dem Lüfter erzeugten Luftstrom umfasst.

Der Antriebsmotor 16 und das Kühlsystem mit dem Kühler 18 sind zusammen in einem Motorraum angeordnet, wobei der Motorraum durch eine Motorraumabdeckung 20 umschlossen ist. Rückseitig an der Motorraumabdeckung 20 ist die Fahrerkabine 12 angeordnet, welche Kabinenscheiben 22 und ein Kabinendach 24 aufweist. In dem Kabinendach 24 ist dabei eine Kabinenscheibe 22 im Wesentlichen waagerecht angeordnet. Die waagerechte Kabinenscheibe 22 in dem Kabinendach 24 ist dabei bündig, insbesondere unterbrechungsfrei ohne Dachstrebe, an einer frontseitigen im Wesentlichen senkrechten Kabinenscheibe 22 angeordnet.

Die landwirtschaftliche Arbeitsmaschine 10 ist gegenüber dem Boden durch Bodeneingriffsmittel 26 abgestützt, welche an einer Vorderachse 28 und einer Hinterachse 30 angeordnet und in Form von Reifen ausgebildet sind. Die Bodeneingriffsmittel 26 können auch in Form von Raupenlaufwerken ausgebildet sein. Die Bodeneingriffsmittel 26 werden zumindest teilweise durch Schutzbleche 32 der Karosserie 34 der Arbeitsmaschine 10 abgedeckt.

Erfindungsgemäß weist die Arbeitsmaschine 10 ein Reinigungssystem 36 auf, welches zumindest teilweise innerhalb der Arbeitsmaschine 10 und deren Karosserie 34 angeordnet ist. Das Reinigungssystem 36 ist dabei fluidbasiert und wirkt ohne mechanische Reinigungselemente wie Bürsten. Das dargestellte Reinigungssystem 36 weist einen Fluidspeicher 38 und eine Pumpe 40 zur Förderung und Druckbeaufschlagung des Fluides auf. Das Reinigungssystem 36 umfasst eine Mehrzahl an Düsen 42, welche jeweils innerhalb oder außerhalb der Arbeitsmaschine 10 angeordnet sind. Die einzelnen Elemente des Reinigungssystems 36, beispielsweise die Düsen 42, die Pumpe 40 und der mindestens eine Fluidspeicher 38, sind über ein Leitungsnetz (nicht dargestellt) verbunden. Die dargestellten Düsen 42 innerhalb der Arbeitsmaschine 10 sind dabei dem Kühler 18 und einem Lüftungsgitter 44 in der Motorraumabdeckung 20 zugeordnet. Die Düsen 42 können verschwenkbar ausgebildet sein, so dass diese bei Betätigung, also einer Druckbeaufschlagung, verschwenken und der Reinigungsbereich der jeweiligen Düse 42 dadurch vergrößert wird. Die verschwenkbaren Düsen 42 können dabei entsprechend der dargestellten Pfeile verschenkt werden, wodurch ein Bauteil mit dem Fluid überstrichen und so der nutzbare Reinigungsbereich der verschwenkbaren Düse 42 vergrößert werden kann. Die internen Düsen 42 ermögliche ein Reinigen beispielsweise des Kühlers 18 und des Lüftungsgitters 44 mit geringem Aufwand ohne Öffnung der Motorraumabdeckung 20.

Die dargestellten externen Düsen 42 sind an den Bodeneingriffsmitteln 26 angeordnet, um insbesondere Verschmutzungen aus dem Profil der Bodeneingriffsmittel 26 zu entfernen. Die Düsen 42 sind dabei an den Schutzblechen 32 und/oder der Karosserie 34 angeordnet. Dabei kann jedem Bodeneingriffsmittel 26 jeweils mindestens eine Düse 42 zugeordnet sein. Weitere externe Düsen 42 sind jeweils den Kabinenscheiben 22 zugeordnet, wobei jeder Kabinenscheibe 22 mindestens eine Düse 42 zugeordnet werden kann. An der im Wesentlichen waagerecht angeordneten Kabinenscheibe 22 in dem Kabinendach 24 können die Düsen 42 an dem seitlichen und/oder rückseitigen Rand des Kabinendaches 24 an der waagerechten Kabinenscheibe 22 angeordnet sein. Dies hat den Vorteil, dass die im Wesentlichen waagerecht angeordnete Kabinenscheibe 22 zuverlässig gereinigt werden kann.

Das Reinigungssystem 36 ist in Form einer Druckluftanlage oder eine Hochdruckanlage für Wasser ausgebildet. Es ist dabei möglich neben einer Druckluftanlage auch eine Hochdruckanlage in die Arbeitsmaschine 10 zu integrieren, wodurch die Reinigung besser an die Art der Verschmutzung anpassbar ist. Ein Antrieb des Reinigungssystems 36 kann über den Antriebsmotor 16 oder einen eigenen Antrieb (nicht dargestellt) erfolgen. Zur Steuerung des Reinigungssystems 36 ist die Steuereinheit 14 vorgesehen, welche eine individuelle Ansteuerung der Düsen 42 ermöglicht. Zur Verbindung einer externen, mobilen Düse 46, welche insbesondere durch den Bediener von Hand führbar ist, weist das Reinigungssystem 36 beispielsweise an der Pumpe 40 einen ersten Anschluss 48 auf. Weitere erste Anschlüsse 48 können an der Arbeitsmaschine 10, insbesondere der Karosserie 34, an gut zugänglichen Stellen angeordnet sein. Die mobile Düse 46 kann über einen Schlauch mit dem ersten Anschluss 48 verbunden werden, wodurch der Einsatzbereich der mobilen Düse 46 vergrößert werden kann. Zum Auffüllen des Fluidspeichers 38 ist mindestens ein zweiter Anschluss 50 vorgesehen, über den das Fluid nachgefüllt werden kann. Dabei können über den zweiten Anschluss 50 ein oder mehrere Fluidspeicher 38 befüllt werden. Bei mehreren Fluidspeichern 38 kann jedem Fluidspeicher 38 ein zweiter Anschluss 50 zugeordnet sein.

### Bezugszeichenliste

- 10: landwirtschaftliche Arbeitsmaschine
- 12: Fahrerkabine
- 14: Steuereinheit
- 16: Antriebsmotor
- 18: Kühler
- 20: Motorraumabdeckung
- 22: Kabinenscheibe
- 24: Kabinendach
- 26: Bodeneingriffsmittel
- 28: Vorderachse
- 30: Hinterachse
- 32: Schutzblech
- 34: Karosserie
- 36: Reinigungssystem
- 38: Fluidspeicher
- 40: Pumpe
- 42: Düse
- 44: Lüftungsgitter
- 46: mobile Düse
- 48: erster Anschluss
- 50: zweiter Anschluss

## Patentansprüche

1. Landwirtschaftliche Arbeitsmaschine (10) mit einer Karosserie (34), einer Fahrerkabine (12) mit Kabinenscheiben (22) und einem Kabinendach (24), Bodeneingriffsmitteln (26) zum Abstützen der Arbeitsmaschine (10) gegenüber dem Boden, wobei die Bodeneingriffsmittel (26) durch einen Antriebsmotor (16) antreibbar sind, **dadurch gekennzeichnet, dass** die Arbeitsmaschine (10) ein fluidbasiertes Reinigungssystem (36) mit mindestens einer Düse (42) und mindestens einem Fluidspeicher (38) aufweist, durch welches zumindest ein Teil der Arbeitsmaschine (10) reinigbar ist.

2. Arbeitsmaschine nach Anspruch 1, **dadurch gekennzeichnet, dass** das Reinigungssystem (36) eine Druckluftanlage und/oder eine Hochdruckanlage für Wasser umfasst.

3. Arbeitsmaschine nach Anspruch 1 oder 2, **dadurch gekennzeichnet, dass** Düsen (42) des Reinigungssystems (36) innerhalb und/oder außerhalb der Arbeitsmaschine (10) angeordnet sind.

4. Arbeitsmaschine nach einem der vorherigen Ansprüche, **dadurch gekennzeichnet, dass** eine Düse (42), insbesondere durch Druckbeaufschlagung, schwenkbar ausgebildet ist.

5. Arbeitsmaschine nach einem der vorherigen Ansprüche, **dadurch gekennzeichnet, dass** die Arbeitsmaschine (10) einen Kühler (18) und/oder eine Motorraumabdeckung (20) mit mindestens einem Lüftungsgitter (44) aufweist, wobei mindestens eine intern angeordnete Düse (42) dem Kühler (18) und/oder einem Lüftungsgitter (44) zugeordnet ist.

6. Arbeitsmaschine nach einem der vorherigen Ansprüche, **dadurch gekennzeichnet, dass** mindestens eine externe Düse (42) einem Bodeneingriffsmittel (26) und/oder einer Kabinenscheibe (22) zugeordnet ist.

7. Arbeitsmaschine nach einem der vorherigen Ansprüche, **dadurch gekennzeichnet, dass** das Reinigungssystem (36) mindestens einen ersten Anschluss (48) zur Verbindung mit einer mobilen, insbesondere handgeführten, Düse (46) aufweist, wobei der erste Anschluss (48) mit Druck beaufschlagbar ist.

8. Arbeitsmaschine nach einem der vorherigen Ansprüche, **dadurch gekennzeichnet, dass** eine Steuereinheit (14) für das Reinigungssystem (36) vorgesehen ist, wobei eine Betätigung des Reinigungssystems (36) automatisch, und insbesondere sensorbasiert, und/oder manuell erfolgen kann.

9. Arbeitsmaschine nach einem der vorherigen Ansprüche, **dadurch gekennzeichnet, dass** das Reinigungssystem (36) eine Pumpe (40) zur Druckbeaufschlagung des Fluides aufweist, wobei die Pumpe (40) durch den Antriebsmotor (16) und/oder einen eigenen, insbesondere elektrischen, Antrieb betreibbar ist.
